# EUROPEAN PATENT SPECIFICATION

(11) **EP 2 607 064 B1**
(45) Date of publication and mention of the grant of the patent: **09.11.2016**
(21) Application number: 12198483.5
(22) Date of filing: 20.12.2012
(51) Int. Cl.: B29D 30/30

(54) **Method and apparatus for applying a sheet of flexible material to a cylindrical body**
Verfahren und Vorrichtung zum Aufbringen eines flexiblen Materialstreifens auf einen zylindrischen Körper
Procédé et appareil permettant d'appliquer une feuille de matériau souple sur un corps cylindrique

(30) Priority: 22.12.2011 US 201161579215 P; 22.12.2011 US 201161579194 P; 31.07.2012 US 201213562627; 31.07.2012 US 201213562605
(43) Date of publication of application: 26.06.2013
(73) Proprietor: The Goodyear Tire & Rubber Company, Akron, OH 44316-0001 (US)
(72) Inventor: Stoila, George Michael, Tallmadge, OH 44278 (US); Wells, Dale Eugene, Massillon, OH 44646 (US); Sells, Thomas Alan, Topeka, KS 66618 (US); Royer, Thierry, B-6700 Frassem (BE)
(74) Representative: Kutsch, Bernd

(56) References cited:
- EP-A1- 1 588 832
- WO-A2-2005/009726
- US-A- 4 407 684

## Description

### Field of the Invention

The invention relates in general to the art of tire building, and more specifically to the applying of tire sheet components or other flexible materials such as, but not limited to, tire ply, inner liner or sidewall directly onto a cylindrical body such as a tire building drum. The invention also relates to a respective method and to a method for applying a ply onto a conveyer belt.

### Background of the Invention

Tire ply or other rubber components are often applied to a tire building drum with a conveyor type device often referred to as an applier. Prior art appliers typically utilize a conveyor type belt to precisely apply the tire component onto the tire building drum. It is important to precisely control the application of the tire component onto the drum, and is particularly of concern for the tail end of the component. It is also important that the component be applied quickly and efficiently as possible. The applier must also retract sufficiently from the drum to provide clearance for other mechanisms and functions. Further, prior art appliers typically require a separate drive and adjustment mechanism in order to make applier adjustable to different sizes of tire building drums.

For large tires such as 144.78 cm tires or larger, the ply size is very large and heavy. The ply size can range from about 2.4 by 2.4 m to 3 m by 3 m. The weight can very from about 765 kg to 990 kg. Prior to application to the tire building drum, the ply is typically wound up onto a spindle of a cart for application onto an applier conveyor system. The ply is typically wound in such a manner that it is not centered with respect to the frame. The ply is delivered onto the applier server so that it is not aligned square to the server and thus will be misaligned with the tire building drum.

Thus a tire ply server and method is needed that ensures that the ply delivered to the tire building drum in a properly aligned condition with respect to the drum such that the leading edge of the ply is square to the drum, and that the center of the ply is aligned with the drum centerline, and also that the ply cords are straight and square to the drum centerline.

EP-A- 1 588 832 describes a device for forming a tire reinforcing layer using a conveyor-type device and the application of such a layer onto a tire building drum.

A similar device and method of applying an elongated strip of material or a tire tread onto a tire building drum are also described in US- A- 4,407,684 and WO-A- 2005/009726.

### Definitions

"Cord" means one of the reinforcement strands, including fibers, which are used to reinforce plies.

"Ply" means a cord-reinforced layer of elastomer-coated, preferably radially deployed or otherwise parallel cords.

### Summary of the Invention

The invention is directed to an apparatus in accordance with claim 1 and to a method in accordance with claim 9.

Dependent claims refer to preferred embodiments of the invention.
In one aspect of the invention, an applier apparatus for applying a sheet of flexible material to a cylindrical body is disclosed. The apparatus comprises a support frame; and a conveyor table having one or more conveyor belts mounted thereon, the conveyor table further comprising a plurality of support legs, each support leg having an outer leg portion and an inner leg portion, wherein each inner leg portion is mounted to the support frame and wherein the conveyor table is connected to each of the outer leg portion of the support legs; wherein the outer leg portion of each support leg has a first end slidably received over the inner leg portion and a second end connected to a nut; wherein the nut is mounted onto a linear screw which is rotatably mounted onto a second end of the inner leg portion; and wherein the linear screw is driven by a motor wherein as the linear screw is rotated, the nut is raised or lowered.

In one aspect of the invention, each support leg may be slidably and/or rotatably mounted to the support frame.

In another aspect of the invention, the support frame may comprise two parallel support rails and each support leg may be slidably mounted over one of the support rails.

In another aspect of the invention, the support frame may comprise two parallel support rails, wherein the inner leg portion of each support leg has a first end rotatably mounted to a foot and the foot is slidably mounted onto one of the support rails.

In another aspect of the invention, a first end of the inner leg portion may further comprise a foot having an upper surface and a lower surface, the upper surface having two opposed flanged ends mounted thereon, each flanged end having an aligned hole therethrough, a ball joint positioned between the flanged ends, a first end of the inner support leg having a flanged end with a hole therethough, and wherein the ball joint is received within the flanged end and a pin is received within a hole of the ball joint and the opposed flanged ends of the foot.

The lower surface of the foot may have a linear bearing mounted thereto which is slidably received on a support rail mounted on the support frame.

The lower surface of the foot may also have a linear bearing mounted thereto which is slidably received on a first support rail mounted on an upper surface of a platform, wherein the first support rail is oriented with the Z direction.

The platform may have a lower surface, wherein the lower surface has two adjacent linear bearings, each linear bearing being mounted on two adjacent rails mounted on the support frame, for sliding in the X direction.

In another aspect of the invention, the conveyor table may comprise two or more conveyor belts, each belt being independently movable of the other belt.

In another aspect of the invention, the conveyor belt may have a plurality of rollers mounted thereon.

In another aspect of the invention, the conveyor belts may a longitudinal axis, and the rollers may be mounted onto the conveyor belts so that they rotate about a first axis which is parallel to the longitudinal direction.

In another aspect of the invention, the support frame may comprise two parallel supports, wherein one of the supports has a single rail, and the other supports has a double rail mounted thereto.

In another aspect of the invention, the conveyor table may further comprise an edge guide.

In another aspect of the invention, the conveyor table may further comprise a plurality of sensors mounted adjacent the edge guide.

In another aspect of the invention, the conveyor table may further comprise a front nose, and a first and second row of brush rollers, wherein the brush rollers are rotatably mounted to the applier apparatus.

In another aspect of the invention, the brush rollers may be mounted to a rotatable support linkage.

In another aspect of the invention, the conveyor table may further comprise at least two rotatably mounted brush rollers, wherein the first brush roller is formed of bristles that have a stiffness different than the bristles of the second brush roller.

In another aspect of the invention, the brushes in the center of the row may comprise soft bristles and the brushes near the outer edges of the row may comprise stiff bristles.

In another aspect of the invention, the outer leg portion may telescope over the inner leg portion.

In another aspect of the invention, the foot may be connected to a chain driven by a gear connected to a servo motor whereby the entire applier apparatus is slid fore and aft along support rails.

In a further aspect of the invention, a method for applying a sheet of flexible material to a cylindrical body is disclosed. The sheet has a first and second lateral edge and a front edge. The method comprises the steps of:
a) receiving the sheet of flexible material onto a conveyor belt of a conveyor table, wherein the conveyor belt can translate in the X direction, wherein the conveyor belt has a plurality of rollers rotatably mounted on the conveyor belt so they can rotate about an axis aligned with the X direction;
b) aligning a lateral edge of the sheet with an edge guide of the conveyor table by tilting the conveyor table;
c) tilting the conveyor table back to a level position;
d) moving a front edge of the conveyor table adjacent the cylindrical body;
   and
e) applying the sheet onto the cylindrical body.

In one aspect of the invention, the method may further include the step of supporting the sheet of material with one or more brush rollers.

In another aspect of the invention, the method may further include the step of supporting the sheet of material with a first and second row of rotatably mounted brush rollers, wherein at least one of the brush rollers has a different brush stiffness than the other brush rollers.

In another aspect of the invention, the method may further include the step of supporting the sheet of material with a row of rotably mounted brush rollers, wherein the brush rollers at the center of the row have a different brush stiffness than the brush rollers located at each end of the row.

In another aspect of the invention, the method may further include the step of supporting the sheet of material with a row of rotably mounted brush rollers, wherein the brush rollers at the center of the row have a softer brush stiffness than the brush rollers located at each end of the row.

In another aspect of the invention, step d) may further include moving the front nose of the conveyor belt adjacent to the cylindrical body at the bottom edge of the body.

In another aspect of the invention, step d) may further include tilting the conveyor table about a minor axis of the conveyor table until the front nose of the conveyor belt is positioned adjacent to the cylindrical body at the bottom edge of the body.

In another aspect of the invention, step b) may further include tilting the conveyor table about the major axis of the table.

In another aspect of the invention, the conveyor table may be supported by a plurality of support legs, wherein the support legs have an outer portion and an inner portion, wherein the table is connected to the outer portion, wherein the outer leg portion slides over the inner leg portion so that the legs can raise and lower the conveyor table.

In another aspect of the invention, the method may further include tilting the conveyor table by lowering one or more support legs by sliding the outer leg portion over the inner leg portion.

In another aspect of the invention, the outer leg portion of each support leg may have a first end slidably received over the inner leg portion and a second end connected to a nut; wherein the nut is mounted onto a linear screw which is rotatably mounted onto a second end of the inner leg portion;said linear screw being driven by a motor wherein as the linear screw is rotated, the nut is raised or lowered whereby the table is raised or lowered.

In yet a further aspect of the invention, a method for aligning the ply onto a conveyor belt is disclosed. The method comprises the steps of:
a) receiving the sheet of flexible material onto a conveyor table having at least two adjacent conveyor belts, wherein the conveyor belts can translate fore and aft in the X direction independently of each other;
b) moving one conveyor belt relative to the other conveyor belt in the X direction until a lateral edge of the sheet is aligned with an edge guide of the conveyor table;
c) moving a front edge of the conveyor table adjacent the cylindrical body; and
d) applying the sheet onto the cylindrical body.

### Brief Description of the Drawings

The invention will be described by way of example and with reference to the accompanying drawings in which:
FIG. 1 is a side view of a ply server of the present invention shown together with a tire building machine and a ply cart;
FIG. 2 is a top view of the system of Figure 1;
FIG. 3A is a side view of the ply server and a tire building drum shown in a first position;
FIG. 3B is a side view of the ply server and a tire building drum shown in an application position;
FIG. 4 is a side view of a leg support of the ply server shown in an angled position.
FIG. 5 is a side view of the leg support of the ply server of FIG. 4 in the direction 5-5.
FIG. 6 is a close up perspective view of the circled portion of Figure 4;
FIG. 7 is an exploded view of the leg support.
FIG. 8 is a close up view of the circled portion of FIG. 3B;
FIG. 9A is a close up view in the direction 9-9 of Fig. 8;
FIGS. 9B-9D illustrate the foot and support legs in an upright position (Fig. 9B), a tilted to the right position (Fig. 9C) and a tilted to the left position (Fig. 9D)
FIG. 10 is a rear view of the ply server in the direction 10-10 of Figure 1;
FIG. 11 is a rear view of the ply server shown tilted in a first direction;
FIG. 12 is a front view of the ply server shown tilted in a second direction opposite the first direction;
FIG. 13 is a side view of the support frame and support legs of the ply server.
FIG. 14 is a top view of the support frame and support legs, as shown in FIG. 13.

### Detailed Description of the Invention

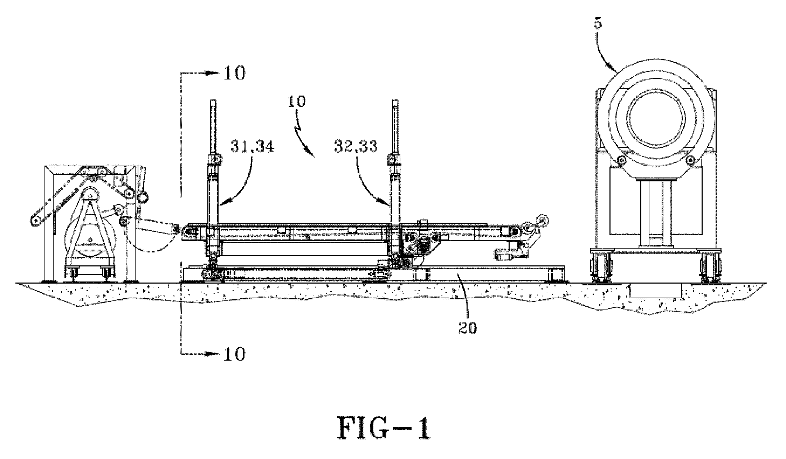

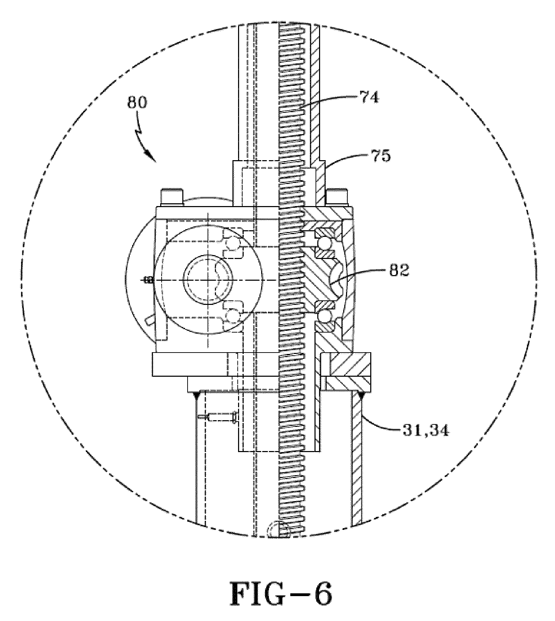

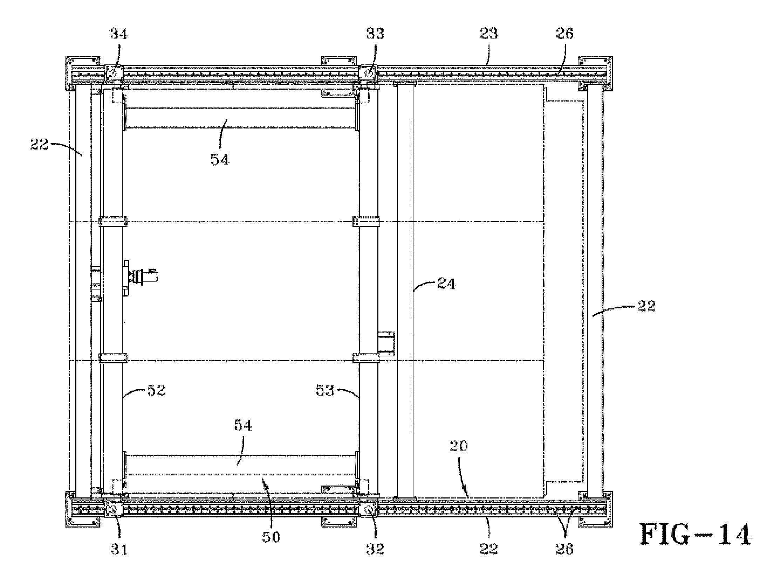

Figures 1-14 illustrate a first embodiment of a tire component applier 10 of the present invention. The tire component applier 10 functions to properly align a tire component such as tire ply or tire liner with respect to a tire building machine or drum 5, and then apply the tire component onto the tire building drum. For large tires having a diameter size of 127 cm or higher, this can be extremely difficult because the tire ply itself can weigh in the range of 450 kg to 900 kg, and have a size on the order of 3 m by 3 m. If the tire component is ply having a plurality of parallel cords, the tire component applier 10 ensures the cords are straight and perpendicular to the tire building drum axis in the case of a radial tire, and that the front edge of the tire ply is square or perpendicular to the tire building drum.

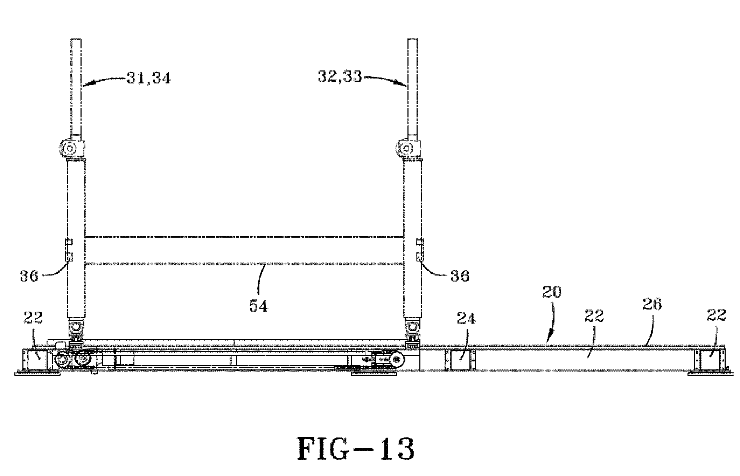

As shown in Figures 1-3B and Figures 13-14, the tire component applier 10 comprises a stationary support frame 20. The support frame 20 as best shown in Figures 13-14 is a rectangular shaped support comprised of four support beams 22, 23 and one or more cross beams 24. Support beams 22, 24 may be mounted to the floor or other support structure. Two of the parallel support beams 22 have a rail mounted on the upper surface of the support beam for allowing the tire applier to slide fore and aft, as described in more detail, below. It is preferred that at least one of the support rails have a double rail 26, as described in more detail, below.

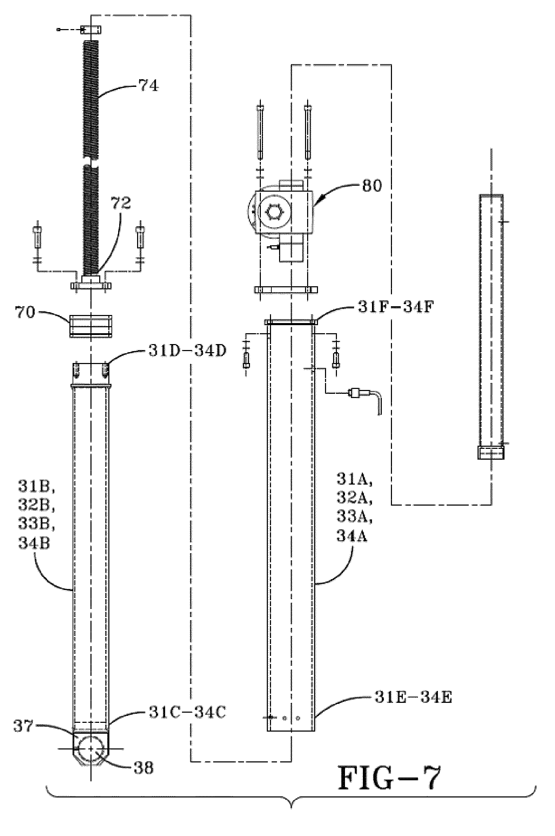

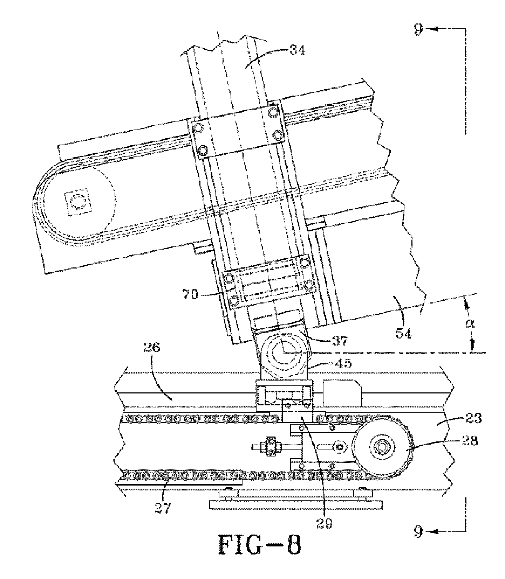

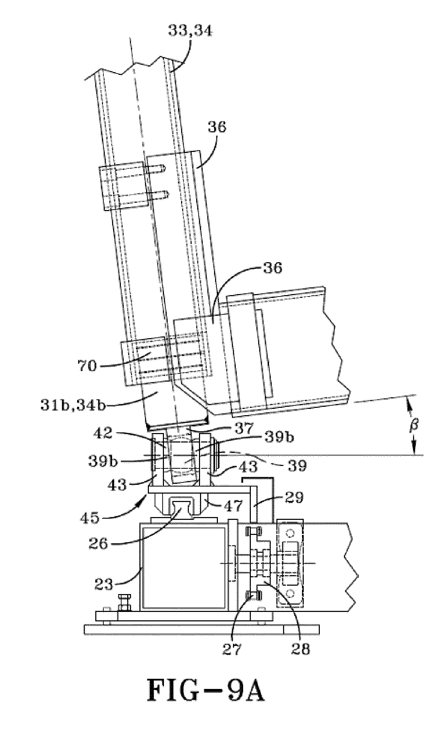

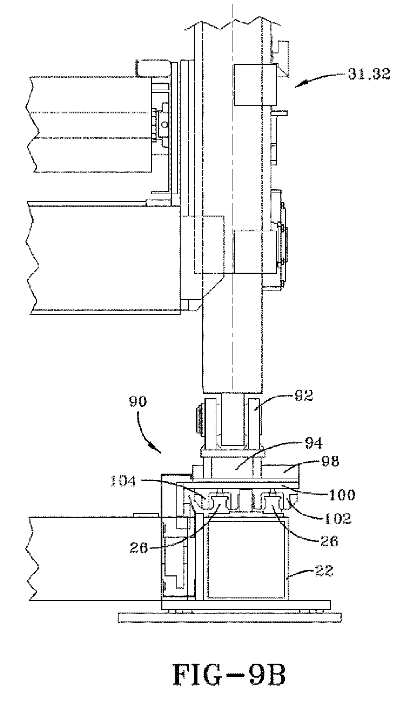

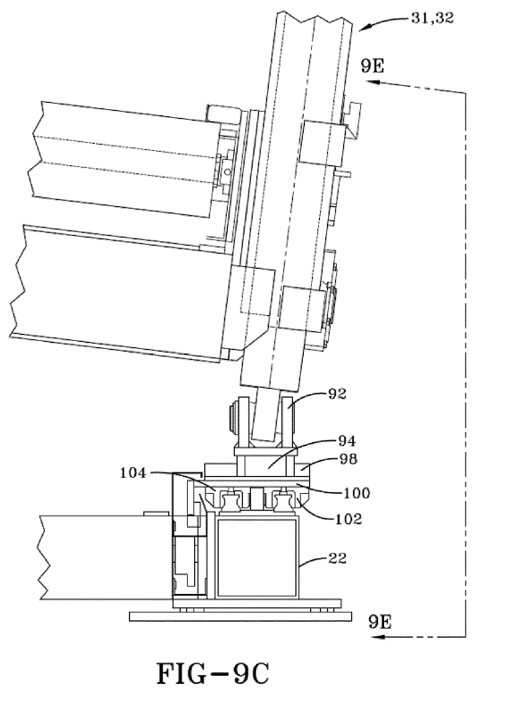

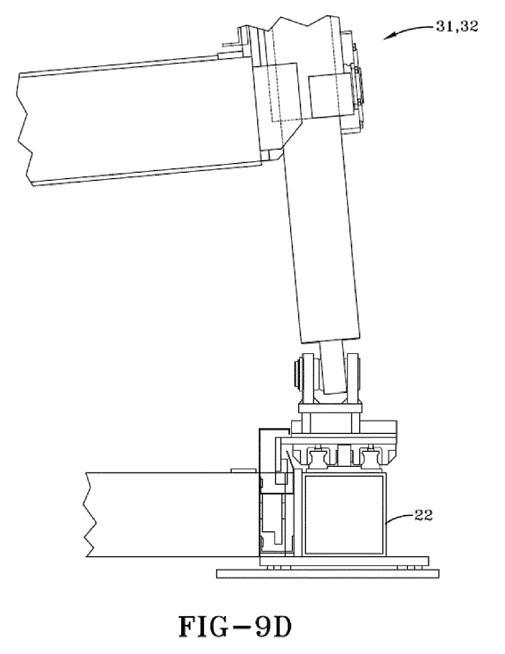

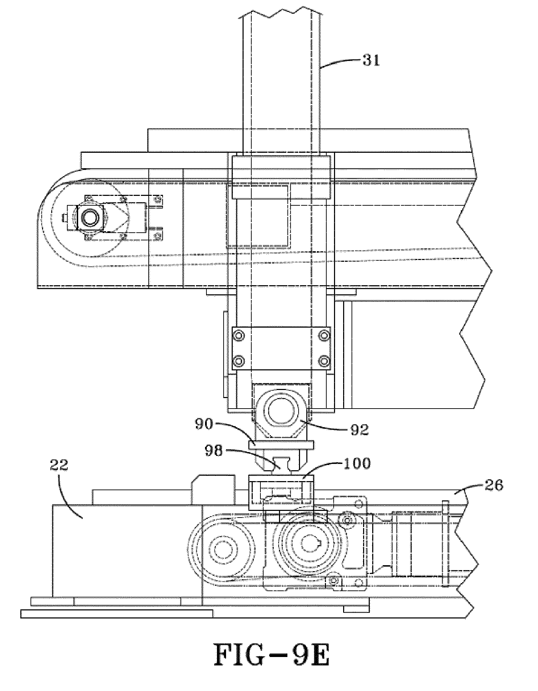

The tire applier 10 further comprises four support legs 31, 32, 33, 34 which support a conveyor table 40. Each support leg has an outer telescoping portion 31 A, 32A, 33A, 34A which slides over inner leg portion 31 B, 32B, 33B, 34B. The inner leg portions therefore slide within the respective outer leg portions on collar bearing 70. As shown in Figures 7 and 9, each inner leg portion has a flanged end 37 having a center hole 38 for receiving a ball joint 39 therein. The ball joint 39 is received within center hole 38 and is rotatably mounted against adjacent bearings 39b. The bearings 39B are contained between a pair of flanged ends 43 mounted on a foot 45. Each foot 45 has a linear bearing 47 which slides on rail 26 (Figure 9), so that the entire applier can slide fore and aft along its major axis (X axis). As shown in Figure 8, at least one of the feet 45 is connected to a chain 27 via a chain connector 29. The chain 27 is driven by a gear 28 connected to a servo motor (not shown), which slides the entire applier 10 fore and aft along support rails 26.

As stated earlier, it is preferred that one of the support beams 23 have two parallel rails 26 mounted thereon. Support beam 23 has a single rail 26. The support legs 33, 34 slide fore and aft on beam 23 and are shown in Figures 8-9. Support legs 31, 32 preferably ride on double rails 26 mounted on beam 22 and are slightly different in construction as shown in Figures 9B-9D. Support legs 31, 32 have modified feet 90 that allow the support legs to translate fore and aft on two support rails 26 in the X direction, and further allow for translation in the Z direction (perpendicular to the rail axis). Each support leg 31, 32 has a foot 90 having spaced flanged ends 92 which receive the flanged ends 37 of support legs and the ball joint 39. Each foot also has a linear bearing 94 which slides on lateral rail 98 to allow the table to translate a small amount in the Z direction (direction of table minor axis). Lateral rail 98 is mounted on platform 100 which has two linear bearings 102, 104 mounted on the underside opposite the lateral rail 90, for sliding on double rails 26. Figure 9B illustrates the support leg in a straight position, while Figure 9C illustrates the foot slid laterally outward in the Z direction when the table is tilted outwardly. Figure 9D illustrates the foot which has partially slid outward in the Z direction when the table is tilted inwardly.

The conveyor table 40 is structurally supported by a table support 50 which includes two parallel support members 52, 53 joined by two parallel cross supports 54 in a rectangular configuration. A first support member 52 has opposed ends which are fixedly connected to outer portion of support legs 31 A and 34A via support brackets 36. A second support member 53 has opposed ends which are fixedly connected to the outer portion of support legs 32A and 33A via support brackets 36. Cross members 54 provide increased frame rigidity and structural support.

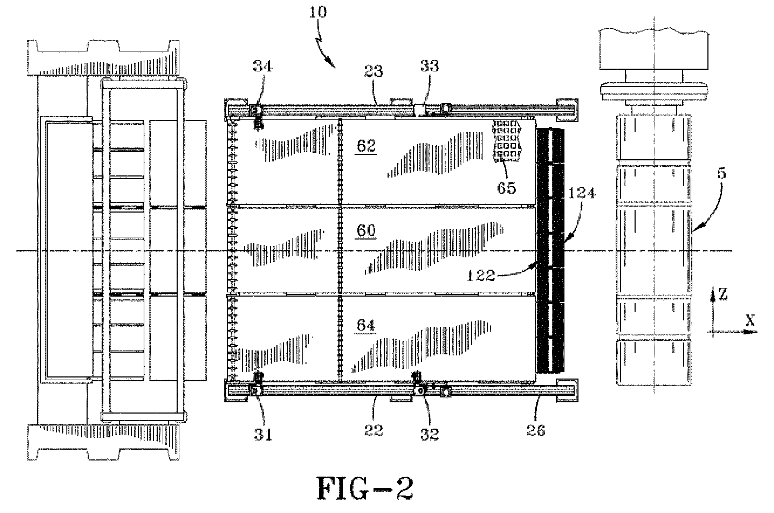

A first portion 42 of the conveyor table 40 is connected to the table support 50 via fasteners (not shown). A second portion 44 of the conveyor table is cantilevered, and extends from the table support 50 so that the ply can be applied to the tire building drum without interference. As shown in Figure 2, the conveyor table 40 includes at least one conveyor belt 60. Preferably, the conveyor table 40 includes at least two conveyor belts 60, 62, which are preferably independently operable with respect to each other. More preferably, the conveyor table includes at least three independently operable conveyor belts 60, 62, 64. Even more preferably, each conveyor belt 60, 62, 64 has a plurality of directional rollers which rotate about an axis parallel to the major axis of the table (X axis). The directional rollers 65 allow the ply to be conveyed laterally in the Z direction (minor axis). Each conveyor belt is driven by a motor 66, only partially shown, and the conveyor belt is capable of being driven in both directions.

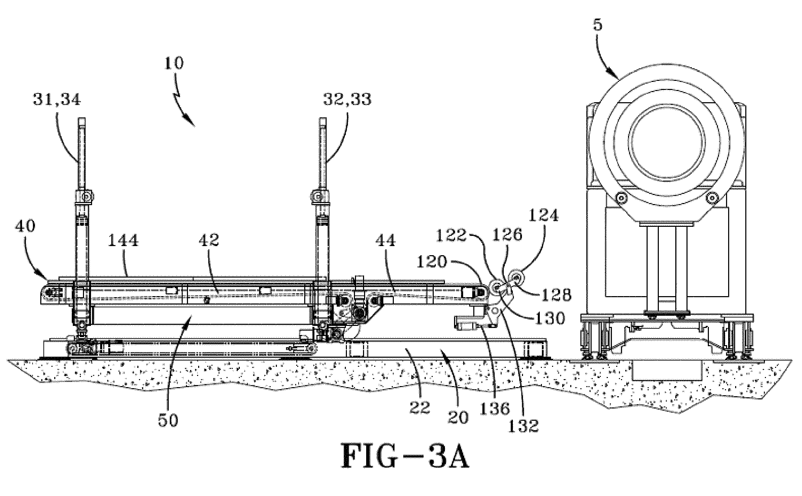

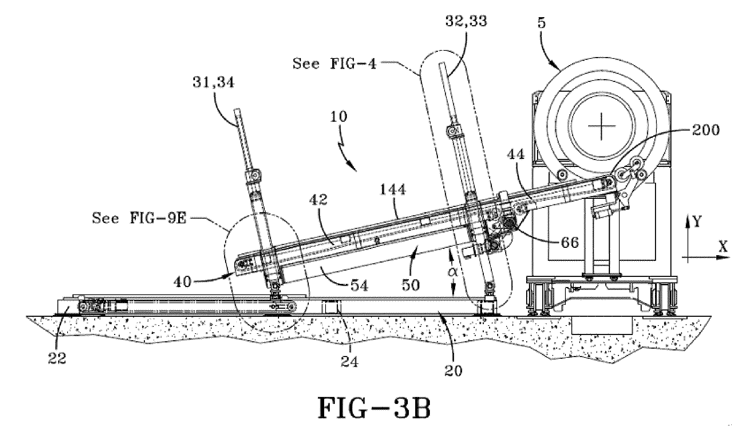

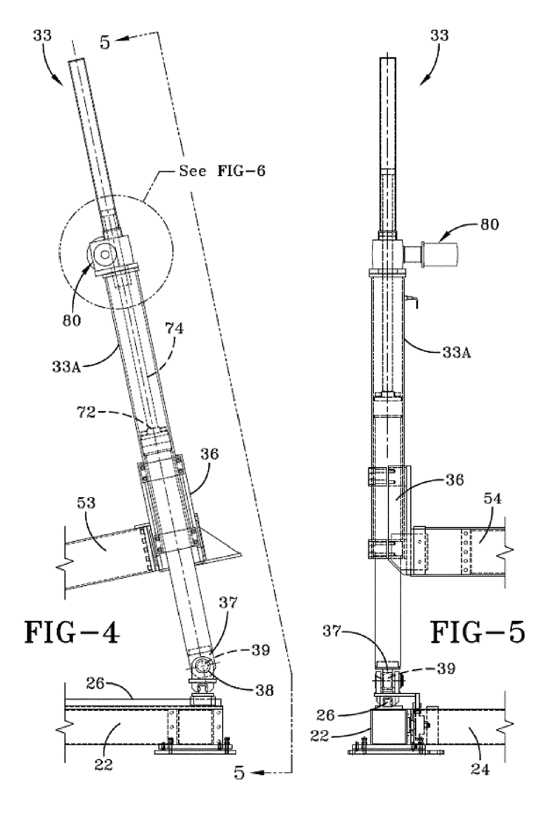

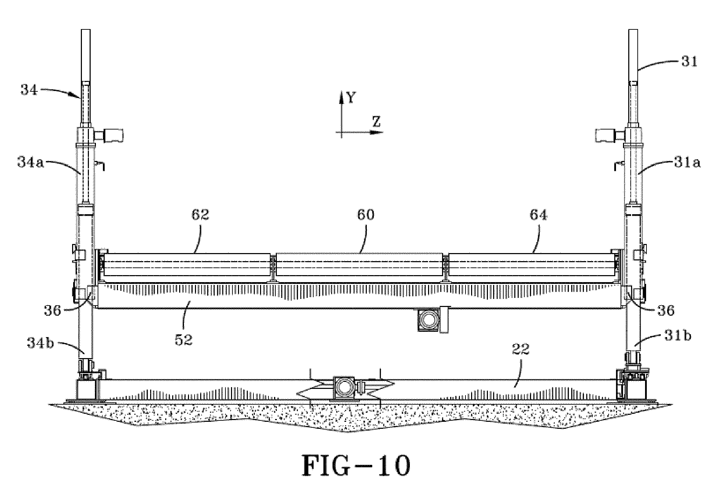

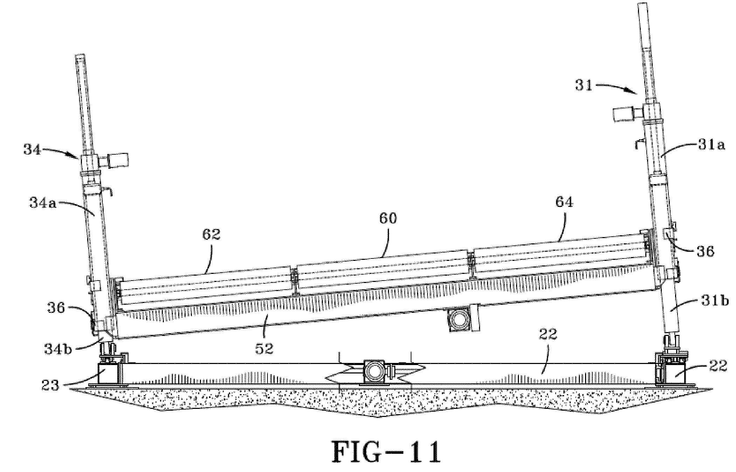

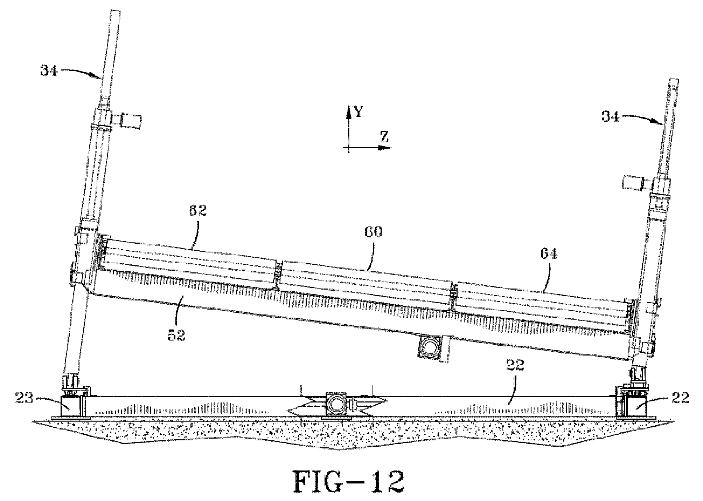

The conveyor table as shown in Figs. 3A and 3B, can rotate about the Z axis an angle a in the range of from 0 to 30 degrees. The conveyor table can also rotate about the X axis in the range of -30 degrees to + 30 degrees, as shown in Figures 11-12. The conveyor table can rotate about the Z axis, and the X axis, or both axes at the same time for the following reasons. Each support leg has a foot which has a joint which can rotate in all directions, and is only constrained by the geometry of the system. In order to rotate the conveyor table about the Z axis as shown in Fig. 3B, the table is raised about support legs 32, 33 and the table is lowered with respect to support legs 31, 34. In order to rotate the conveyor table about the X axis as shown in Figures 11, the table is raised with respect to support legs 31, 32 and lowered with respect to support legs 33, 34. In order to tilt the table to the other side as shown in Fig 12, the conveyor table is raised with respect to support legs 33, 34 and lowered with respect to support legs 31, 32.
The conveyor table can be raised and lowered with respect to each support leg in a manner as described in more detail, below. Each support leg 31-34 has an outer portion 31A-34A which slides over a respective inner portion 31B-34B in a telescoping fashion. Each inner leg portion 31B-34B has a first end 31C-34C having a flanged end for coupling to a foot, and a second end 31 D-34D connected to an inner end 72 of a linear screw 74 so that the screw can rotate. The outer leg portion 31 A-34A has a first end 31 E-34E having a annular bearing ring 70 inserted therein to facilitate the outer first end having a smooth telescoping motion over inner leg 31B-34B. The table support frame 50 is fixedly connected to each support leg near the first end 31 E-34E by a leg support bracket 36, so that as the outer leg portion telescopes for and aft, the table support frame moves therewith. The outer leg portion 31A-34A further comprises a second end 31 F-34F which is connected to a linear screw drive mechanism 80, as shown in Figures 4-7. The screw drive mechanism 80 engages a rotatable linear screw 74. The screw drive mechanism 80 further includes a nut 82 which engages linear screw 74. The screw is rotated by a gear and motor assembly (not shown) or other means known to those skilled in the art. As the screw is rotated in a first direction, the nut is translated upward in a first direction parallel to the Y direction. As the screw is rotated opposite the first direction, the nut is translated downward. As the nut is translated in either direction, the outer leg portion also translates and telescopes, resulting in the lifting/lowering of the table. Thus the operation of the screw drive mechanism results in the conveyor table being lifted. As best shown in Figures 10-12, the rear view of the applier 10 is shown in a level state, and a tilted state. As shown in Figure 10, the applier is level. In order to tilt the table to the left as shown in Figure 11, the screw of leg 34 is rotated, resulting in the nut traveling downward. As the nut travels downward in a direction parallel to the Y axis, the outer portion of the leg connected to the screw assembly telescopes in a downward direction over the inner leg portion, resulting in the table moving downward, wherein the leg is fully retracted. In order to lift the table, the screw of leg 31 is rotated in the opposite direction of screw 34, so that the nut of leg 31 translates upward resulting in the outer portion of leg 31 telescoping outward in a expanding way over inner portion of leg 31.

The front edge 120 of the body ply table is fitted with at least one row of brush rollers, and is preferably fitted with at least two rows of brush rollers 122, 124. Each row of brush rollers comprises one or more brush rollers. Preferably each brush roller is mounted so that it can rotate about its longitudinal axis so that it can rotate. The brush rollers in the upper or first row 122 are mounted to a first end 130 of a support bar 126. The brush rollers in the lower row are mounted to a second end 128 of the support bar 126. The support bar is pivotally mounted to a linkage 132 having a distal end which is mounted to the arm of a linear actuator 136. The linkage is pinned to the end of support frame at a connection, allowing the linkage to rotate about the pinned connection, but not allowing translation. When the arm of the linear actuator 136 opens and closes, the linkage132 pivots about the connection, causing the one or more rows of rollers to rotate upwardly or downwardly in the +/- Y direction.

The brush rollers 122, 124 are configured to support the ply or liner as the ply is being applied to the tire building drum. As shown in Fig 3B, the conveyor table is positioned beneath the tire building drum with the rollers tilted upwardly so that the rollers are located adjacent the tire building drum. As the ply/liner is conveyed forward, the rollers apply the liner/ply to the tire building drum. The tire building drum may be convex in shape when viewed from the side. The brush rollers are designed to provide minimum force at the drum centerline, and maximum load holding and positioning forces at the outboard edges. One way to accomplish this is to have the brush rollers at the outboard edges to be stiffer than the brush rollers near the drum centerline. In addition, it is preferred that the brush rollers be grouped in multiple sets, each set having a pair 122, 124 of rollers and a actuating mechanism 132, 136. It is additionally preferred that each brush roller lifting cylinder be fitted with programmable control valves to allow precise, discreet air pressure to each cylinder so that a precise, discreet force is applicable to the sheet. Thus the roller force may vary from the center of the table and be higher on the outer edge of the table. The programmable valves allow for independent control of each set of brush rollers.

### System Operation

The operation of the system can now be described. A sheet of ply, inner liner or other sheet of tire component (hereinafter "ply") is cut to length and fed onto the rear portion of the conveyor belts 60, 62, 64. All three conveyor belts are driven forward in the X direction, ie, in a direction towards the tire building machine until all of the component is mounted onto the conveyor table. At this stage, it is typical for the ply to have a front edge that is misaligned, ie, not square to the tire building drum.

In order to align the ply or tire component, the table is tilted to one side by the operator as shown in Figure 11. The table can tilt to either side because it is affixed to each support leg, and each support leg can be raised and lowered independently of each other. Each support leg has an outer telescoping portion which slides over an inner leg portion. Each inner leg portion is rotatably coupled to a foot such that the leg can freely pivot or rotate in all directions. The inner leg portion is connected to the rotatable linear screw, while the outer leg portion is connected to a nut. As the screw rotates, the nut travels along the screw, raising or lowering the outer leg portion which is affixed to the conveyor table.

As the table is tilted to one side by the operator as shown in Figure 11, the ply or component slides on the conveyor belt rollers towards an edge guide 144. The conveyor belt rollers only rotate in one direction so that the ply can translate towards the edge guide, i.e., in the Z direction. The tilt angle of the table ensures that the entire edge of the ply is aligned with the entire edge of the edge guide. After the edge alignment has occurred, the table is then tilted back to its starting position, as shown in Fig.1. Table sensors mounted near the edge guide notify the operator of misalignment of the component. After the ply or component edge is aligned, the table is translated forward in the X direction. Each foot 45 has a linear bearing 47 which slides on a rail, so that the entire applier can slide fore and aft along its major axis (X axis). As shown in Figure 8, at least one of the feet 45 is connected to a chain 27 via a chain connector 29. The chain 27 is driven by a gear 28 connected to a servo motor (not shown), which slides the entire applier 10 fore and aft along support rails 26.

The table is driven forward and lifted upward into position so that the forward nose 120 of the table is located adjacent the bottom outer surface 200 (6 pm position) of the tire building drum, as shown in Figure 3B. The brush rollers are lifted upward by the actuation of the linear actuator and are positioned adjacent the nose of the table and the tire building drum (in the 5 pm position). After the table and rollers are in position, the ply or component is conveyed forward by rotation of the conveyor belts. The brush rollers lift up and support the ply and transfer the ply to the outer surface of the tire building drum by applying pressure to the ply against the drum as the drum rotates. After the ply or component is applied to the drum, the table is retracted, lowered and returned to the start position.

The ply or sheet misalignment may also be corrected by the use of the independent conveyors 60, 62, 64. As described above, each conveyor belt can move in the + or - direction independent of the other conveyors. If the sheet is rotated onto the conveyor table, then one or more of the belts can be driven forward or backwards to rotate the sheet in the desired direction and into the alignment position. At least one of the conveyor belts is stationary, to facilitate the rotation of the sheet on the conveyor table.

## Claims

1. An applier apparatus (10) for applying a sheet of flexible material to a cylindrical body (5), the apparatus (10) comprising:
a support frame (20); and
a conveyor table (40) having one or more conveyor belts (60, 62, 64) mounted thereon, the conveyor table (40) further comprising a plurality of support legs (31, 32, 33, 34), each support leg having an outer leg portion (31 A, 32A, 33A, 34A) and an inner leg portion (31 B, 32B, 33B, 34B), wherein each inner leg is mounted to the support frame (20) and wherein the conveyor table (40) is connected to each of the outer leg portion of the support legs;
wherein the outer leg portion of each support leg has a first end slidably received over the inner leg portion and a second end connected to a nut (82);
wherein the nut (82) is mounted onto a linear screw (74) which is rotatably mounted onto a second end of the inner leg portion;
and wherein the linear screw (74) is driven by a motor wherein as the linear screw (74) is rotated, the nut (82) is raised or lowered.

2. The applier apparatus of claim 1 wherein each support leg (31, 32, 33, 34) is slidably and/or rotatably mounted to the support frame (20).

3. The applier apparatus of claim 1 or 2 wherein the support frame (20) comprises two parallel support rails (26), and wherein each support leg is slidably mounted over one of the support rails.

4. The applier apparatus of at least one of the previous claims wherein the support frame (20) comprises two parallel support rails (26), wherein the inner leg portion of each support leg (31, 32, 33, 34) has a first end (31C, 32C, 33C, 34C) rotatably mounted to a foot (90), and the foot (90) is slidably mounted onto one of the support rails (26).

5. The applier apparatus of at least one of the previous claims wherein a first end of the inner leg portion further comprises a foot (90) having an upper surface and a lower surface, the upper surface having two opposed flanged ends (37) mounted thereon, each flanged end having an aligned hole (38) therethrough, a ball joint (39) positioned between the flanged ends (37), a first end of the inner support leg having a flanged end with a hole therethough, and wherein the ball joint (39) is received within the flanged end (37) and a pin is received within a hole of the ball joint and the opposed flanged ends of the foot.

6. The applier apparatus of claim 5 wherein the lower surface of the foot (90) has a linear bearing (94) mounted thereto which is slidably received on a support rail (26) mounted on the support frame (20).

7. The applier apparatus of claim 5 or 6 wherein the lower surface of the foot (90) has a linear bearing (94) mounted thereto which is slidably received on a first support rail (26) mounted on an upper surface of a platform, wherein the first support rail (26) is oriented with the Z direction.

8. The applier apparatus of claim 7 wherein the platform has a lower surface, wherein the lower surface has two adjacent linear bearings (94), each linear bearing (94) being mounted on two adjacent rails (26) mounted on the support frame (20), for sliding in the X direction.

9. A method for applying a sheet of flexible material to a cylindrical body (5), the sheet having a first and second lateral edge and a front edge, the method comprising the steps of:
a) receiving the sheet of flexible material onto a conveyor belt (60, 62, 64) of a conveyor table (40), wherein the conveyor belt can translate in the X direction, wherein the conveyor belt has a plurality of rollers rotatably mounted on the conveyor belt so they can rotate about an axis aligned with the X direction;
b) aligning a lateral edge of the sheet with an edge guide of the conveyor table (40) by tilting the conveyor table;
c) tilting the conveyor table (40) back to a level position;
d) moving a front edge of the conveyor table (40) adjacent the cylindrical body;
and
e) applying the sheet onto the cylindrical body (5).

10. The method of claim 9 further including the step of supporting the sheet of material with one or more brush rollers (122, 124).

11. The method of claim 9 or 10 further including the step of supporting the sheet of material with a first and second row of rotatably mounted brush rollers (122, 124), wherein at least one of the brush rollers (122, 124) has a different brush stiffness than the other brush rollers.

12. The method of claim 9, 10 or 11 further including the step of supporting the sheet of material with a row of rotably mounted brush rollers, wherein the brush rollers (122, 124) at the center of the row have a different or softer brush stiffness than the brush rollers located at each end of the row.

13. The method of at least one of the previous claims 9 to 12 wherein step b) further includes tilting the conveyor table (40) about the major axis of the table.

## Patentansprüche

1. Auflegevorrichtung (10) zum Aufbringen eines flexiblen Materialstreifens auf einen zylindrischen Körper (5), wobei die Vorrichtung (10) umfasst:
einen Tragrahmen (20); und
einen Fördertisch (40) mit einem oder mehreren darauf montierten Förderbändern (60, 62, 64), wobei der Fördertisch (40) weiter eine Vielzahl von Stützbeinen (31, 32, 33, 34) umfasst, wobei jedes Stützbein einen äußeren Beinteil (31A, 32A, 33A, 34A) und einen inneren Beinteil (31 B, 32B, 33B, 34B) aufweist, wobei jedes innere Bein an dem Tragrahmen (20) montiert ist und wobei der Fördertisch (40) mit jedem der äußeren Beinteile der Stützbeine verbunden ist;
wobei der äußere Beinteil jedes Stützbeins ein verschiebbar über dem inneren Beinteil aufgenommenes erstes Ende und ein mit einer Mutter (82) verbundenes zweites Ende aufweist;
wobei die Mutter (82) auf einer linearen Spindel (74) montiert ist, die drehbar an einem zweiten Ende des inneren Beinteils montiert ist;
und wobei die lineare Spindel (74) von einem Motor angetrieben wird, wobei, wenn die lineare Spindel (74) gedreht wird, die Mutter (82) angehoben oder abgesenkt wird.

2. Auflegevorrichtung nach Anspruch 1, wobei jedes Stützbein (31, 32, 33, 34) verschiebbar und/oder drehbar an dem Tragrahmen (20) montiert ist.

3. Auflegevorrichtung nach Anspruch 1 oder 2, wobei der Tragrahmen (20) zwei parallele Tragschienen (26) umfasst und wobei jedes Stützbein verschiebbar über einer der Tragschienen montiert ist.

4. Auflegevorrichtung nach mindestens einem der vorhergehenden Ansprüche, wobei der Tragrahmen (20) zwei parallele Tragschienen (26) umfasst, wobei der innere Beinteil jedes Stützbeins (31, 32, 33, 34) ein erstes Ende (31C, 32C, 33C, 34C) aufweist, das drehbar an einem Fuß (90) montiert ist, und der Fuß (90) verschiebbar auf einer der Tragschienen (26) montiert ist.

5. Auflegevorrichtung nach mindestens einem der vorhergehenden Ansprüche, wobei ein erstes Ende des inneren Beinteils einen Fuß (90) umfasst, der eine Oberseite und eine Unterseite aufweist, wobei die Oberseite zwei daran montierte entgegengesetzte Flanschanschlüsse (37) aufweist, wobei jeder Flanschanschluss ein ausgerichtetes Loch (38) dort hindurch aufweist, wobei ein Kugelgelenk (39) zwischen den Flanschanschlüssen (37) positioniert ist, wobei ein erstes Ende des inneren Stützbeins einen Flanschanschluss mit einem Loch dort hindurch aufweist, und wobei das Kugelgelenk (39) in dem Flanschanschluss (37) aufgenommen ist und ein Zapfen in einem Loch des Kugelgelenks (39) und der entgegengesetzten Flanschanschlüsse des Fußes aufgenommen ist.

6. Auflegevorrichtung nach Anspruch 5, wobei die Unterseite des Fußes (90) eine daran montierte Linearführung (94) aufweist, die verschiebbar auf einer auf dem Tragrahmen (20) montierten Tragschiene (26) aufgenommen ist.

7. Auflegevorrichtung nach Anspruch 5 oder 6, wobei die Unterseite des Fußes (90) eine daran montierte Linearführung (94) aufweist, die verschiebbar auf einer ersten Tragschiene (26), die auf einer Oberseite einer Plattform montiert ist, aufgenommen ist, wobei die erste Tragschiene (26) zu der Z-Richtung orientiert ist.

8. Auflegevorrichtung nach Anspruch 7, wobei die Plattform eine Unterseite aufweist, wobei die Unterseite zwei benachbarte Linearführungen (94) aufweist, wobei jede Linearführung (94) auf zwei auf dem Tragrahmen (20) montierten benachbarten Schienen (26) montiert ist, zum Verschieben in der X-Richtung.

9. Verfahren zum Aufbringen eines flexiblen Materialstreifens auf einem zylindrischen Körper (5), wobei der Streifen eine erste und eine zweite Seitenkante und eine Vorderkante aufweist, wobei das Verfahren die Schritte umfasst des:
a) Aufnehmens des flexiblen Materialstreifens auf einem Förderband (60, 62, 64) eines Fördertischs (40), wobei das Förderband sich in der X-Richtung bewegen kann, wobei das Förderband eine Vielzahl von drehbar an dem Förderband montierten Rollen aufweist, sodass sie sich um eine zur X-Richtung ausgerichtete Achse drehen können;
b) Ausrichtens einer Seitenkante des Streifens mit einer Kantenführung des Fördertischs (40) durch Neigen des Fördertischs;
c) Neigens des Fördertisches (40) zurück zu einer waagerechten Position;
d) Bewegens einer Vorderkante des Fördertischs (40) benachbart zu dem zylindrischen Körper;
und
e) Aufbringens des Streifens auf den zylindrischen Körper (5).

10. Verfahren nach Anspruch 9, weiter den Schritt des Unterstützens des Materialstreifens mit einer oder mehreren Bürstenwalzen (122, 124) umfassend.

11. Verfahren nach Anspruch 9 oder 10, weiter den Schritt des Unterstützens des Materialstreifens mit einer ersten und einer zweiten Reihe drehbar montierter Bürstenwalzen (122, 124) umfassend, wobei mindestens eine der Bürstenwalzen (122, 124) eine andere Bürstensteifigkeit aufweist als die anderen Bürstenwalzen.

12. Verfahren nach Anspruch 9, 10 oder 11, weiter den Schritt des Unterstützens des Materialstreifens mit einer Reihe drehbar montierter Bürstenwalzen umfassend, wobei die Bürstenwalzen (122, 124) im Zentrum der Reihe eine andere oder weichere Bürstensteifigkeit aufweisen als die an jedem Ende der Reihe angeordneten Bürstenwalzen.

13. Verfahren nach mindestens einem der vorhergehenden Ansprüche 9 bis 12, wobei Schritt b) weiter das Neigen des Fördertischs (40) um die Hauptachse des Tischs beinhaltet.

## Revendications

1. Appareil d'application (10) pour appliquer une feuille d'une matière flexible sur un corps cylindrique (5), l'appareil (10) comprenant :
un cadre de support (20) ; et
une table transporteuse (40) sur laquelle sont montées une ou plusieurs courroies transporteuse (60, 62, 64), la table transporteuse (40) comprenant en outre plusieurs branches de support (31, 32, 33, 34), chaque branche de support possédant une portion correspondant à une branche externe (31A, 32A, 33A, 34A) et une portion correspondant à une branche interne (31 B, 32B, 33B, 34B), chaque branche interne étant montée sur le cadre de support (20) et dans lequel la table transporteuse (40) est reliée à chacune des portions des branches de support correspondant aux branches externes ;
dans lequel la portion de chaque branche de support correspondant à la branche externe possède une première extrémité qui vient se disposer par glissement par-dessus la portion correspondant à la branche interne et une deuxième extrémité reliée à un écrou (82) ;
dans lequel l'écrou (82) est monté sur une vis linéaire (74) qui est montée en rotation sur une deuxième extrémité de la portion correspondant à la branche interne ;
et dans lequel la vis linéaire (74) est entraînée par un moteur, l'écrou (82) étant soulevé ou abaissé lorsque la vis linéaire (74) est mise en rotation.

2. Appareil d'application selon la revendication 1, dans lequel chaque branche de support (31, 32, 33, 34) est montée en glissement et/ou en rotation sur le cadre de support (20).

3. Appareil d'application selon la revendication 1 ou 2, dans lequel le cadre de support (20) comprend deux rails de support parallèles (26), et dans lequel chaque branche de support est montée en glissement par-dessus un des rails de support.

4. Appareil d'application selon au moins une des revendications précédentes, dans lequel le cadre de support (20) comprend deux rails de support parallèles (26), la portion de chaque branche de support (31, 32, 33, 34) correspondant à la branche interne possédant une première extrémité (31C, 32C, 33C, 34C) montée en rotation sur une base (90), et la base (90) étant montée en glissement sur un des rails de support (26).

5. Appareil d'application selon au moins une des revendications précédentes, dans lequel une première extrémité de la portion correspondant à la branche interne comprend en outre une base (90) possédant une surface supérieure et une surface inférieure, deux extrémités bridées opposées (37) étant montées sur la surface supérieure, un trou (38) mis en alignement traversant chaque extrémité bridée, un joint à rotule (39) étant disposé entre les extrémités bridées (37), une première extrémité de la branche de support interne possédant une extrémité bridée que traverse un trou et le joint à rotule (39) venant se loger au sein de l'extrémité bridée (37), et une broche venant s'insérer au sein d'un trou du joint à rotule et entre les extrémités bridées opposées de la base.

6. Appareil d'application selon la revendication 5, dans lequel un palier linéaire (94) est monté sur la surface inférieure de la base (90), qui vient se disposer par glissement sur un rail de support (26) monté sur le cadre de support (20).

7. Appareil d'application selon la revendication 5 ou 6, dans lequel un palier linéaire (94) est monté sur la surface inférieure de la base (90), qui vient se disposer par glissement sur un premier rail de support (26) monté sur la surface supérieure d'une plate-forme, le premier rail de support (26) étant orienté dans la direction Z.

8. Appareil d'application selon la revendication 7, dans lequel la plate-forme possède une surface inférieure, la surface inférieure possédant deux paliers linéaires adjacents (94), chaque palier linéaire (94) étant monté sur deux rails adjacents (26) montés sur le cadre de support (20) pour coulisser dans la direction X.

9. Procédé pour appliquer une feuille d'une matière flexible sur un corps cylindrique (5), la feuille possédant un premier et un deuxième bord latéral et un bord avant, le procédé comprenant les étapes consistant à :
a) réceptionner la feuille de matière flexible sur une courroie transporteuse (60, 62, 64) d'une table transporteuse (40), la courroie transporteuse étant à même d'effectuer un mouvement de translation dans la direction X, la courroie transporteuse possédant plusieurs rouleaux montés en rotation sur la courroie transporteuse de façon à pouvoir effectuer des rotations autour d'un axe mis en alignement avec la direction X ;
b) mettre le bord latéral de la feuille en alignement avec un guide du bord de la table transporteuse (40) en faisant basculer la table transporteuse ;
c) faire basculer la table transporteuse (40) en retour jusqu'à une position horizontale ;
d) déplacer un bord frontal de la table transporteuse (40) pour l'amener en position adjacente au corps cylindrique ; et
e) appliquer la feuille sur le corps cylindrique (5).

10. Procédé selon la revendication 9, englobant en outre l'étape consistant à supporter la feuille de matière avec des rouleaux à brosses (122, 124).

11. Procédé selon la revendication 9 ou 10, englobant en outre l'étape consistant à supporter la feuille de matière avec une première et une deuxième rangée de rouleaux à brosses (122, 124) montées en rotation, au moins un des rouleaux à brosses (122, 124) possédant une dureté de brosse différente de celle des autres rouleaux à brosses.

12. Procédé selon la revendication 9, 10 ou 11, englobant en outre l'étape consistant à supporter la feuille de matière avec une rangée de rouleaux à brosses (122, 124) montée en rotation, les rouleaux à brosses (122, 124) au centre de la ranger possédant une dureté de brosse différente ou inférieure à celle des rouleaux à brosses qui sont disposés à chaque extrémité de la rangée.

13. Procédé selon au moins une des revendications précédentes 9 à 12, dans lequel l'étape b) englobe en outre le fait de faire basculer la table transporteuse (40) autour du grand axe de la table.
